# FASCICULE DE BREVET EUROPEEN

(11) **EP 1 384 905 B1**
(45) Date de publication et mention de la délivrance du brevet: **13.09.2006**
(21) Numéro de dépôt: 03354065.9
(22) Date de dépôt: 16.07.2003
(51) Int. Cl.: F16B 37/06, F16B 39/30

(54) **Ecrou noyé à sertir autofreiné par un filet rapporté**
Krimpmutter mit selbsthemmendem Gewindeeinsatz
Clinch nut with self-restraining threaded insert

(30) Priorité: 22.07.2002 FR 0209271
(43) Date de publication de la demande: 28.01.2004
(73) Titulaire: Bollhoff Otalu S.A., 73490 La Ravoire (FR)
(72) Inventeur: Begel, Nicolas, 73000 Chambery (FR); Sutz, Xavier, 73420 Voglans (FR)
(74) Mandataire: Hecké, Gérard

(56) Documents cités:
- FR-A- 607 984
- FR-A- 1 045 327
- FR-A- 1 080 808
- FR-A- 1 297 093
- FR-A- 2 624 224
- GB-A- 1 216 738
- GB-A- 2 140 117
- US-A- 5 006 025

## Description

### Domaine technique de l'invention

L'invention concerne un écrou noyé à sertir comprenant un corps ayant une tête et un fût, lequel est subdivisé en une première zone de sertissage d'épaisseur de paroi réduite située du côté de la tête, et en une deuxième zone destinée à recevoir un élément fileté de fixation.

### État de la technique

Les écrous libres ou à souder sont autofreinés, soit à l'aide d'un filet rapporté, soit par déformation plastique du taraudage de l'écrou, le taraudage pouvant être elliptique ou trilobé, ou soit par adjonction d'une colle ou d'une bague de freinage dans le taraudage. Il est également possible de réaliser un écrou autofreiné en faisant varier la valeur et l'inclinaison du pas de taraudage. Ainsi, le document FR -A-2624224 décrit un écrou autofreiné comportant un corps taraudé et un filet hélicoïdal vissé dans le taraudage. Le filet hélicoïdal comporte des spires d'extrémité circulaire, une partie de spire en forme de polygone régulier et une portion de spire polygonale disposée entre une des spires d'extrémité circulaire et la partie de spire en forme de polygone régulier. La portion de spire a un côté de polygone plus petit que celui du polygone régulier de la partie de spire en forme de polygone.

Les écrous à sertir autofreinés connus sont généralement réalisés par déformation plastique du taraudage ou par adjonction de colle dans le taraudage. Les écrous à sertir autofreinés par déformation du taraudage présentent l'inconvénient de générer un freinage peu reproductible car il dépend de l'élasticité du matériau constituant l'écrou à sertir, tandis que l'adjonction de colle ne permet pas de dévisser un élément fileté de fixation vissé dans l'écrou.

Le document FR-A-1080808 décrit un rivet tubulaire pouvant être engagé d'une manière indessérrable sur un organe de fixation fileté. Le rivet comporte, à une de ses extrémités, une portion taraudée de diamètre réduit qui forme la partie terminale de serrage ou de blocage du rivet. Ainsi, la portion taraudée comporte au moins une spire complète ayant un diamètre réduit par rapport aux spires disposées dans le reste du rivet.

### Objet de l'invention

L'objet de l'invention consiste à réaliser un écrou noyé à sertir autofreiné ayant une résistance mécanique élevée, indépendamment des contraintes thermiques et vibratoires, et résistant à la corrosion galvanique.

Selon l'invention, ce but est atteint par les revendications annexées.

Plus particulièrement, ce but est atteint par le fait que la deuxième zone comporte un pré-taraudage recevant un filet rapporté autofreinant composé d'une pluralité de spires cylindriques, et d'au moins une spire de freinage de forme polygonale, ladite spire de freinage étant disposée en aval de la position extrême d'une broche de pose utilisée pour le sertissage de l'écrou, la distance entre la spire de freinage et l'extrémité du filet rapporté disposée du côté de la tête de l'écrou étant supérieure ou égale au diamètre de l'élément fileté de fixation.

D'autres caractéristiques peuvent être utilisées isolément ou en combinaison :

Ainsi, le filet rapporté peut être soumis à un traitement de surface, comme une lubrification sèche, un argentage, un cadmiage ou un zingage.

Selon une autre caractéristique, la tête du corps possède une forme fraisée, plate ou elliptique et le fût a une section hexagonale ou circulaire.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
Les figures 1 et 2 sont respectivement une vue en coupe partielle et une vue de dessus d'un écrou à sertir selon l'invention.
Les figures 3 et 4 représentent en coupe partielle un écrou à sertir suivant la figure 1 et une broche de pose pendant différentes étapes d'une opération de sertissage.
La figure 5 représente une vue en coupe partielle de l'écrou selon les figures 3 et 4 après sertissage.
La figure 6 représente une vue en coupe partielle de l'écrou serti selon la figure 5, fixé sur un élément à assembler.

### Description de modes particuliers de réalisation

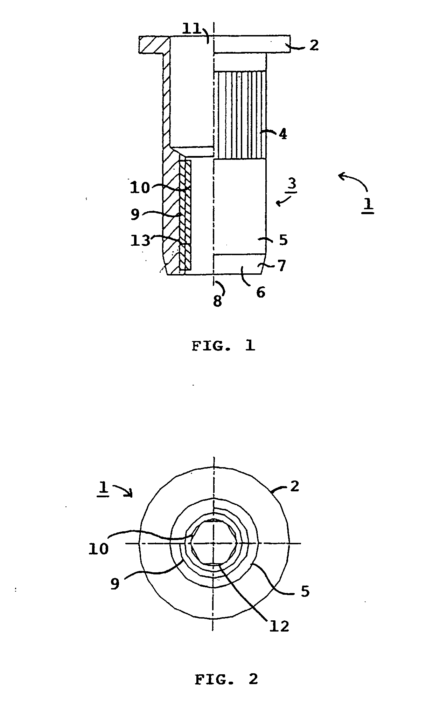

Sur la figure 1, un écrou noyé à sertir 1 comporte un corps ayant une tête creuse 2 et un fût métallique 3. Le fût métallique 3 est subdivisé en une zone de sertissage 4 de section réduite et située du côté de la tête 2, et en une deuxième zone 5 destinée à recevoir un élément fileté de fixation. La deuxième zone 5 comporte un alésage cylindrique 6, un chanfrein 7 de forme tronconique et faisant un angle voisin de 15° avec l'axe 8 de l'écrou 1. La deuxième zone 5 comporte également un pré-taraudage 9, recevant un filet rapporté hélicoïdal 10 avant sertissage de l'écrou 1 sur une pièce de support.

La tête 2 comporte un orifice 11 disposé co-axialement à l'alésage 6 de la deuxième zone 5. L'épaisseur de la paroi constitutive de la zone de sertissage 4 est inférieure à celle de la deuxième zone 5, de manière à permettre la formation d'un bourrelet d'assemblage lors de l'opération de sertissage. La face externe du fût 3 est de préférence moletée, mais tout état de surface ou forme de préhension peut être utilisé. Le fût 3 peut être borgne ou débouchant.

L'écrou noyé à sertir 1 est réalisé par frappe ou décolletage, en utilisant des aciers au carbone, des aciers inoxydables, de l'aluminium ou du cuivre. Le fût 3 peut avoir une section circulaire, hexagonale ou semi-hexagonale. La tête 2 de l'écrou à sertir 1 peut être indifféremment une tête plate, fine, fraisée ou elliptique et constituée d'un matériau choisi parmi l'acier, l'acier inoxydable, l'aluminium ou le cuivre.

Comme représenté sur les figures 1 et 2, le filet rapporté hélicoïdal 10, comportant plusieurs spires cylindriques et une spire de freinage 12 de forme polygonale, est vissé dans le pré-taraudage 9 de l'écrou à sertir 1. La forme de la spire de freinage dépend du freinage souhaité. La position de la spire de freinage 12 est représentée sur la figure1 par un trait 13.

Le filet rapporté 10 permet de réaliser un écrou noyé à sertir autofreinant et d'améliorer la résistance à l'usure du taraudage lors des opérations de vissage et de dévissage d'une vis dans l'écrou 1. L'association de l'écrou à sertir et du filet rapporté comportant une spire de freinage, assure une résistance élevée aux vibrations et améliore la résistance mécanique de l'écrou à sertir. Elle permet également de garder un freinage de la vis efficace sur plusieurs cycles de vissage et dévissage.

Le filet rapporté est de préférence en acier inoxydable (austénitique, réfractaire...), en aluminium ou en bronze, ce qui apporte au système de fixation, une résistance au choc thermique élevée. Il peut également subir un traitement de surface tel que la lubrification sèche, l'argentage, le cadmiage ; le zingage, ..., afin d'éviter les phénomènes de corrosion électrolytique possibles entre l'écrou à sertir et la vis destinée à être vissée dans l'écrou à sertir et de limiter les phénomènes de grippage entre la vis et l'écrou.

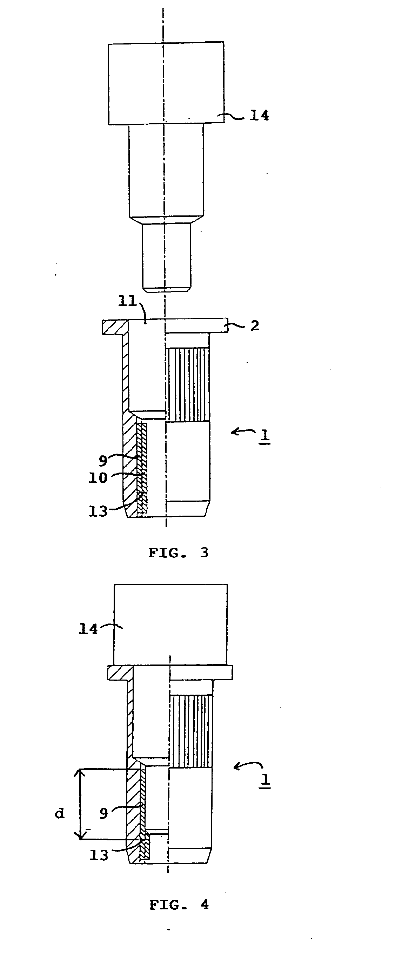

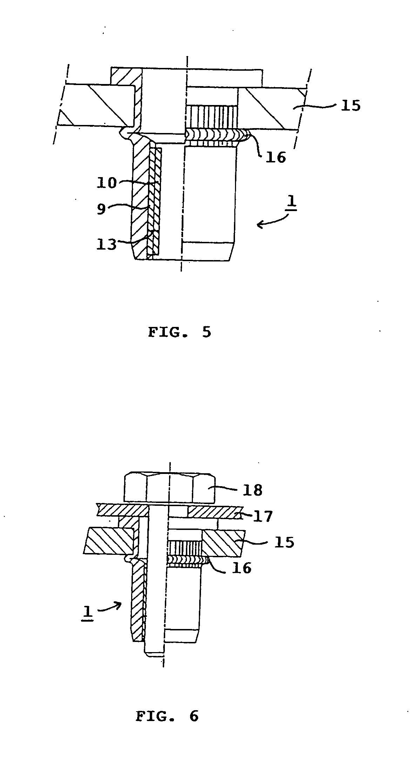

Lors d'une opération de sertissage de l'écrou, une broche de pose 14 (figure 3) est vissée dans le taraudage de l'écrou à sertir 1 (figure 4), par l'intermédiaire de l'orifice 11 de la tête 2. Par rapport aux autres spires constituant le filet rapporté 10, la spire de freinage 12 est disposée en aval de la position extrême de la broche de pose 14 utilisée pour le sertissage de l'écrou, de manière à ne jamais venir en contact avec la broche de pose 14. En effet, si la spire de freinage était en contact avec la broche de pose 17, la spire de freinage 12 pourrait être endommagée par la broche de pose 14 lors du sertissage et cela pourrait gêner le dévissage de la broche de pose. De plus, si la broche de pose venait en contact avec la spire de freinage, l'écrou noyé à sertir tournerait sur lui-même dans son logement. La position de la spire de freinage 12 est représentée sur la figure 4 par le trait 13.

La figure 5 illustre l'écrou 1 après l'opération de sertissage, l'écrou 1 étant serti dans un logement d'une pièce de support 15. Un bourrelet 16 de sertissage résultant de la déformation du fût 3, assure le maintien de l'écrou à sertir 1 contre la face inférieure de la pièce de support 15.

La distance d entre la spire de freinage 12 et l'extrémité du filet rapporté 10 disposée du côté de la tête 2 de l'écrou (figure 4) est supérieure ou égale au diamètre de l'élément fileté de fixation 18 destiné à être vissé dans le filet rapporté 10. Cette distance d permet non seulement à la spire de freinage 12 de ne pas être en contact avec la broche de pose 14 lors du sertissage de l'écrou, de manière à ne pas arracher le filet rapporté 10, mais elle garantit également à la broche de pose 14 une prise suffisante dans le filet rapporté 10, de manière à réaliser une déformation du fût 3 satisfaisante. La figure 6 illustre l'écrou 1 serti après fixation d'un élément à assembler 17 par un élément fileté de fixation 18.

## Revendications

1. Ecrou noyé à sertir (1) comprenant un corps ayant une tête (2) et un fût (3), lequel est subdivisé en une première zone de sertissage (4) d'épaisseur de paroi réduite située du côté de la tête (2), et en une deuxième zone (5) destinée à recevoir un élément fileté de fixation (18), **caractérisé en ce que** la deuxième zone (5) comporte un pré-taraudage (9) recevant un filet rapporté (10) autofreinant composé d'une pluralité de spires cylindriques, et d'au moins une spire de freinage (12) de forme polygonale, ladite spire de freinage (12) étant disposée en aval de la position extrême d'une broche de pose (14) utilisée pour le sertissage de l'écrou (1), la distance (d) entre la spire de freinage (12) et l'extrémité du filet rapporté (10) disposée du côté de la tête (2) étant supérieure ou égale au diamètre de l'élément fileté de fixation (18).

2. Ecrou selon la revendication 1, **caractérisé en ce que** le filet rapporté (10) est constitué d'un matériau choisi parmi l'acier inoxydable, le bronze et l'aluminium.

3. Ecrou selon l'une des revendications 1 et 2, **caractérisé en ce que** le filet rapporté (10) est soumis à un traitement de surface.

4. Ecrou selon la revendication 3, **caractérisé en ce que** le traitement de surface du filet rapporté (10) est une lubrification sèche.

5. Ecrou selon la revendication 3, **caractérisé en ce que** le traitement de surface du filet rapporté (10) est un argentage.

6. Ecrou selon la revendication 3, **caractérisé en ce que** le traitement de surface du filet rapporté (10) est un cadmiage.

7. Ecrou selon la revendication 3, **caractérisé en ce que** le traitement de surface du filet rapporté (10) est un zingage.

8. Ecrou selon l'une quelconque des revendications 1 à 7, **caractérisé en ce que** la tête (2) du corps de l'écrou (1) est constituée d'un matériau choisi parmi l'acier, l'acier inoxydable, l'aluminium ou le cuivre.

9. Ecrou selon l'une quelconque des revendications 1 à 8, **caractérisé en ce que** la tête (2) du corps de l'écrou (1) possède une forme fraisée, plate ou elliptique et que le fût a une section hexagonale ou circulaire.

## Claims

1. Blind clinch nut (1) comprising a body having a head (2) and a shank (3), which is subdivided into a first crimping zone (4) of reduced wall thickness situated on the side where the head (2) is located, and a second zone (5) designed to receive a threaded fixing part (18), **characterized in that** the second zone (5) comprises a pre-threading (9) receiving a self-locking thread insert (10) composed of a plurality of cylindrical coils and at least one polygonal-shaped locking coil (12), said locking coil (12) being arranged downstream from the extreme position of a fitting pin (14) used for crimping the nut (1), the distance (d) between the locking coil (12) and the end of the thread insert (10) arranged on the side where the head (2) is located being greater than or equal to the diameter of the threaded fixing element (18).

2. Nut according to claim 1, **characterized in that** the thread insert (10) is made from a material chosen from stainless steel, bronze and aluminium.

3. Nut according to one of the claims 1 and 2, **characterized in that** the thread insert (10) is subjected to a surface treatment.

4. Nut according to claim 3, **characterized in that** the surface treatment of the thread insert (10) is a dry lubrication.

5. Nut according to claim 3, **characterized in that** the surface treatment of the thread insert (10) is a silver plating.

6. Nut according to claim 3, **characterized in that** the surface treatment of the thread insert (10) is a cadmium plating.

7. Nut according to claim 3, **characterized in that** the surface treatment of the thread insert (10) is a zinc plating.

8. Nut according to any one of the claims 1 to 7, **characterized in that** the head (2) of the body of the nut (1) is made from a material chosen from steel, stainless steel, aluminium or copper.

9. Nut according to any one of the claims 1 to 8, **characterized in that** the head (2) of the body of the nut (1) has a flat or elliptic, milled shape and that the shank has a hexagonal or circular cross-section.

## Patentansprüche

1. Blindnietmutter (1) mit einem Körper, der einen Kopf (2) und einen Schaft (3) hat, der in eine erste Krimpzone (4) mit verringerter Wanddicke, die sich auf der Seite des Kopfes (2) befindet, sowie eine zweite Zone (5) unterteilt ist, die dazu bestimmt ist, ein gewindetes Befestigungselement (18) aufzunehmen, **dadurch gekennzeichnet, dass** die zweite Zone (5) ein Vorgewinde (9) umfasst, das einen selbstbremsenden Gewindeeinsatz (10) aufnimmt, der von einer Mehrzahl zylindrischer Windungen und mindestens einer Bremswindung (12) mit polygonaler Form gebildet wird, wobei die Bremswindung (12) unterhalb der Endposition einer Einbauspindel (14) angeordnet ist, die zum Einsetzen der Mutter (1) verwendet wird, wobei der Abstand (d) zwischen der Bremswindung (12) und dem Ende des Gewindeeinsatz (10), das sich auf der Seite des Kopfes (2) befindet, größer als der Durchmesser des gewindeten Befestigungselements (18) oder gleich diesem ist.

2. Mutter nach Anspruch 1, **dadurch gekennzeichnet, dass** der Gewindeeinsatz (10) aus einem Material besteht, das aus Inoxstahl, Bronze und Aluminium ausgewählt ist.

3. Mutter nach einem der Ansprüche 1 und 2, **dadurch gekennzeichnet, dass** der Gewindeeinsatz (10) einer Oberflächenbehandlung unterzogen wird.

4. Mutter nach Anspruch 3, **dadurch gekennzeichnet, dass** die Oberflächenbehandlung des Gewindeeinsatz (10) in einer Trockenschmierung besteht.

5. Mutter nach Anspruch 3, **dadurch gekennzeichnet, dass** die Oberflächenbehandlung des Gewindeeinsatz (10) in einer Versilberung besteht.

6. Mutter nach Anspruch 3, **dadurch gekennzeichnet, dass** die Oberflächenbehandlung des Gewindeeinsatz (10) in einer Kadmierung besteht.

7. Mutter nach Anspruch 3, **dadurch gekennzeichnet, dass** die Oberflächenbehandlung des Gewindeeinsatz (10) in einer Verzinkung besteht.

8. Mutter nach einem der Ansprüche 1 bis 7, **dadurch gekennzeichnet, dass** der Kopf (2) des Körpers der Mutter (1) aus einem Material besteht, das aus Stahl, Inoxstahl, Aluminium oder Kupfer ausgewählt ist.

9. Mutter nach einem der Ansprüche 1 bis 8, **dadurch gekennzeichnet, dass** der Kopf (2) des Körpers der Mutter (1) eine gefräste, ebene oder elliptische Form und dass der Schaft einen sechseckigen oder kreisförmigen Querschnitt hat.
